# EUROPÄISCHE PATENTANMELDUNG

(11) **EP 0 855 263 A2**
(43) Veröffentlichungstag der Anmeldung: **29.07.1998**
(21) Anmeldenummer: 98100418.7
(22) Anmeldetag: 13.01.1998
(51) Int. Cl.: B29C 47/12

(54) **Verfahren und Vorrichtung zur Herstellung eines Hüll-Wellrohres mit einem in diesem befindlichen Medienrohr**

(30) Priorität: 22.01.1997 DE 19701970
(71) Anmelder: Hegler, Ralph Peter, Dr.-Ing., 97688 Bad Kissingen (DE)
(72) Erfinder: Hegler, Ralph Peter, Dr.-Ing., 97688 Bad Kissingen (DE)
(74) Vertreter: Rau, Manfred, Dr. Dipl.-Ing.

(57) **Zusammenfassung**

Ein mit Querrillen (3) versehenes Hüll-Wellrohr (1) mit einem in diesem befindlichen Medienrohr (2) wird auf einer Vorrichtung mit einem Rohrkopf (10) hergestellt, der einen Durchführkanal (30) für das Medienrohr (2) aufweist. Die Formgebung des Hüll-Wellrohres (1) erfolgt auf einer Formmaschine (9), die in Produktionsrichtung (6) bewegbare, sich zu einer Formstrecke (47) ergänzende Halbkokillen (43, 43') aufweist. Die Formgebung des Hüll-Wellrohres (1) erfolgt ausschließlich durch Unterdruck gegenüber Atmosphärendruck, der an der Innenseite der Halbkokillen (43, 43') aufgebracht wird.

## Beschreibung

Die Erfindung betrifft ein Verfahren zur Herstellung eines Hüll-Wellrohres mit einem in diesem befindlichen Medienrohr nach Anspruch 1 und eine Vorrichtung zur Durchführung des Verfahrens nach Anspruch 6.

Aus der Heizungs- und Sanitärtechnik ist es bekannt Medienrohre aus unterschiedlichsten Werkstoffen und zwar Kunststoffen, mit Hüll-Wellrohren zu schützen. Hierdurch werden Oberflächenbeschädigungen an den Medienrohren vermieden. Im Schadensfall kann das Medienrohr, ähnlich wie bei elektrischen Leitungen leicht ausgetauscht werden. Das defekte Rohr wird entfernt ein neues Medienrohr wird eingezogen. In der Praxis werden derartige Medienrohre ausschließlich nachträglich in das Hüll-Wellrohr eingezogen bzw. eingeschoben. Diese Art der Herstellung erfordert einen intensiven zweiten Arbeitsvorgang nach der Herstellung des Hüll-Wellrohres und nur begrenzte Rohrlängen, was zu einer entsprechend großen Zahl von Verbindungsstellen und gegebenenfalls zu Abfall bei der Installation führt.

Aus der EP 0 683 032 A ist ein Verfahren der gattungsgemäßen Art bekannt bei dem ein Hüll-Wellrohr in der üblichen Weise hergestellt und anschließend längs aufgeschlitzt wird. In das aufgeschlitzte Hüll-Wellrohr wird ein Medienrohr eingelegt, das gegenüber dem Hüll-Wellrohr Spiel aufweist. Anschließend wird das Hüll-Wellrohr wieder verschweißt. Der apparative Aufwand hierfür ist sehr hoch. Weiterhin besteht die Gefahr, daß das relativ dünnwandige Hüll-Wellrohr nach dem Verschweißen nicht mehr über die ursprüngliche Steifigkeit verfügt.

Aus der DE 22 61 530 B ist ein Verfahren oder eine Vorrichtung zur Herstellung von Hüll-Wellrohren mit einem in dieses eingezogenen Kabel bekannt. Hierbei weist der Rohrkopf des Querspritzkopfes für das Hüll-Wellrohr einen sich in die Formstrecke hineinerstreckenden Innendorn auf, der innerhalb des aus dem Rohrkopf extrudierten Schlauches einen Überdruckraum abschließt, in den Luft zum Andrücken des Schlauches an die Profilierung der Kokillen geblasen wird. Die Verformung des Schlauches auf der Formmaschine erfolgt also nach dem sogenannten Blasverfahren. In dem Rohrkopf und dem Innendom ist ein durchgehender Durchführ-Kanal für Elektro-Kabel vorgesehen. Aufgrund der geschilderten Ausgestaltung kann nur ein verhältnismäßig kleiner Anteil des Innenquerschnittes des Hüll-Wellrohres für die Elektro-Kabel genutzt werden. Aus diesem Grund ist dieses bekannte Verfahren und diese bekannte Vorrichtung nicht geeignet, ein Medienrohr bei der Herstellung des Hüll-Welkohres mit in dieses einlaufen zu lassen. Aus den genannten Gründen hat dieses Verfahren keinen Eingang in die Praxis gefunden.

Aus der DE 36 90 231 C2 ist es bekannt, ein Medienrohr in ein zuvor in Längsrichtung geschlitztes Rohr aus Wärmeisoliermaterial einzulegen und die Oberfläche des Schlitzes mit einem Klebstoff zu versehen. Anschließend wird das mit dem Medienrohr versehene Rohr aus Wärmeisoliermaterial in einen Querspritzkopf eines Extruders mit einem Mantel aus geeignetem Kunststoff umspritzt, der in einer Formmaschine mittels sich zu einer in Produktionsrichtung bewegten, geschlossenen Form ergänzenden Halbkokillen mit Rippen versehen wird, wobei in der Form ein Unterdruck erzeugt wird. Ein direktes Einführen eines Medienrohres in einen zur Erzeugung eines Hüll-Wellrohres erzeugten noch warmplastischen Schlauch ist hierbei nicht vorgesehen und hiermit auch nicht möglich.

Der Erfindung liegt die Aufgabe zugrunde, ein Verfahren der gattungsgemäßen Art zu schaffen, mittels dessen der Innenquerschnitt des Hüll-Wellrohres weitgehend durch die mindestens eine Leitung ausfüllbar ist, und eine Vorrichtung zur Durchführung des Verfahrens anzugeben.

Diese Aufgabe wird bei dem Verfahren der gattungsgemäßen Art durch die Merkmale des Anspruches 1 gelöst. Bei einer Vorrichtung der gattungsgemäßen Art wird diese Aufgabe durch die Merkmale des Anspruches 6 gelöst.

Durch den ausschließlichen Einsatz einer Vakuumverformung werden Maßnahmen am Rohrkopf bzw. in der Formmaschine unnötig, durch die bei der Herstellung des Hüll-Wellrohres und beim Miteinlaufen des Medienrohres ein Teil des Innenquerschnittes des Hüll-Wellrohres bereits verbraucht wird. Der Innenquerschnitt des Hüll-Wellrohres kann also zu einem großen Teil durch das Medienrohr ausgefüllt werden. Hierdurch wird erreicht, daß die Hüll-Wellrohre keinen unnötigen Platz bei der Verlegung in Anspruch nehmen und daß auch kein unnötiger Materialaufwand erfolgt.

Nach Anspruch 2 ist es von ganz besonderer vorteilhafter Bedeutung, daß das die in den Schlauch eingeführte Medienrohr vor der Einführung mit einem Trennmittel versehen wird. Dies ermöglicht es, den Außendurchmesser des Medienrohres dem Innendurchmesser des Hüll-Wellrohres anzunähern, da bei der Extrusion des Schlauches dieser mit der mit Trennmittel beschichteten Leitung in Berührung kommen kann.

Die nach Anspruch 6 zur Durchführung des Verfahrens vorgesehene Vorrichtung ist ohne einen Innendom ausgebildet, der Innenquerschnitt des Schlauches ist also bei der Verformung zumindest weitgehend Bei. Anspruch 7 gibt hierzu die Maßnahmen an, die eine völlige Freiheit des Innenquerschnittes des Schlauches ermöglichen.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: ein von einem Hüll-Wellrohr aufgenommenes Medienrohr,
- Fig. 2: eine Anlage zur Herstellung eines Hüll-Wellrohres mit in diesem befindlichen Medienrohr und
- Fig. 3: einen Längsschnitt durch einen Rohrkopf und einen Teil einer nachgeordneten Formmaschine aus der Anlage gemäß Fig. 2.

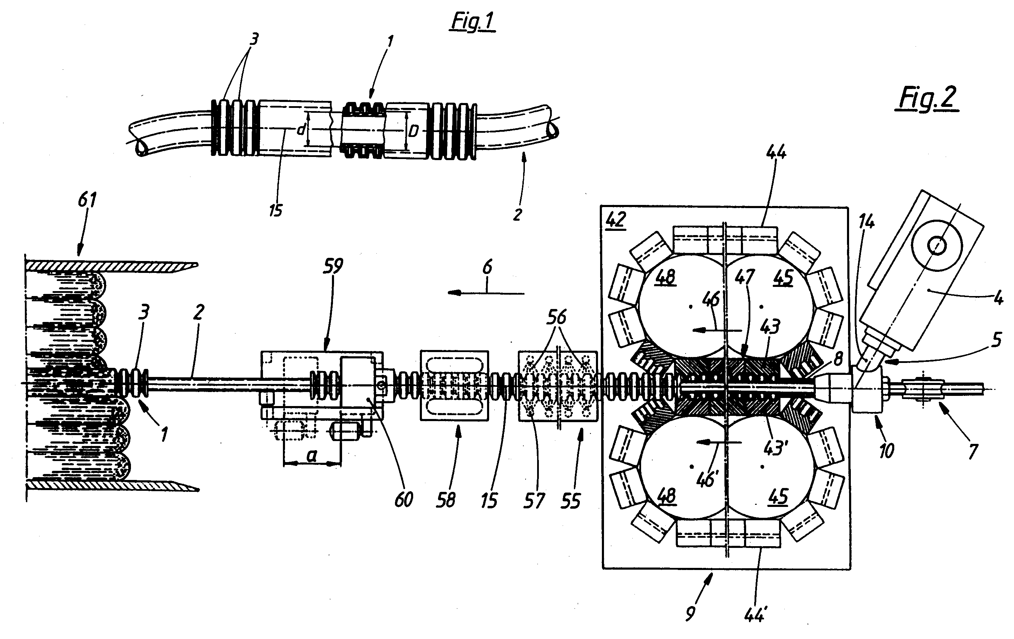

Fig. 1 zeigt ein Hüll-Wellrohr 1 mit einem sogenannten Medienrohr 2, also einem Rohr für kaltes oder heißes Wasser oder sonstige strömungsfähige Medien. Der Einsatz erfolgt insbesondere im Heizungs- und Sanitär-Bereich, wo das aus unterschiedlichsten Werkstoffen, beispielsweise vernetztem Polyethylen (PE-X), Polypropylen (PP), Polybuten (PB) und dergleichen bestehende Medienrohr 2 durch ein Schutzrohr, nämlich ein Hüll-Welkohr 1 gegen Beeinträchtigungen von außen her geschützt werden soll. Bei dem Hüll-Wellrohr 1 handelt es sich um ein übliches mit Querrillen 3 zur Verstärkung versehenes Wellrohr, das also einerseits biegsam ist und andererseits eine hohe Scheiteldruckfestigkeit bei geringem Gewicht aufweist. Wie aus Fig. 1 hervorgeht, ist der Außendurchmesser d des durchgehend glatten Medienrohres 2 nur unwesentlich geringer als der Innendurchmesser D des Hüll-Wellrohres 1. Es gilt etwa 0,65 D ≤ d ≤ 0,95 D und bevorzugt 0,7 D ≤ d ≤ 0,95 D.

Fig. 2 zeigt eine Anlage zur Herstellung eines solchen Hüll-Wellrohres 1 mit eingezogenem Medienrohr 2. Sie weist einen Extruder 4 auf, der mit einem sogenannten Querspritzkopf 5 versehen ist, so daß sich der Extruder selber nicht in der gradlinigen Produktionsrichtung 6 befindet, sondern bezogen auf die Produktionsrichtung 6 von der Seite her in den Querspritzkopf 5 einmündet. Dem weiter unten noch genauer zu beschreibenden Querspritzkopf 5 ist - bezogen auf die Produktionsrichtung 6 - eine Einführvorrichtung 7 für das endlos zuzuführend Medienrohr 2 vorgeordnet. Aus dem Querspritzkopf 5 wird in Produktionsrichtung 6 ein Schlauch 8 aus warmplastischem Kunststoff extrudiert, der das Medienrohr 2 konzentrisch umgibt. Dieser Schlauch 8 wird in einer nachgeordneten Formmaschine 9 nach dem sogenannten Vakuumverfahren zu dem Wellrohr 1 verformt. Derartige Formmaschinen 9 sind beispielsweise aus den deutschen Patenten 1 203 940 und 1 211 789 (entspr. GB-PS 971 021) allgemein bekannt.

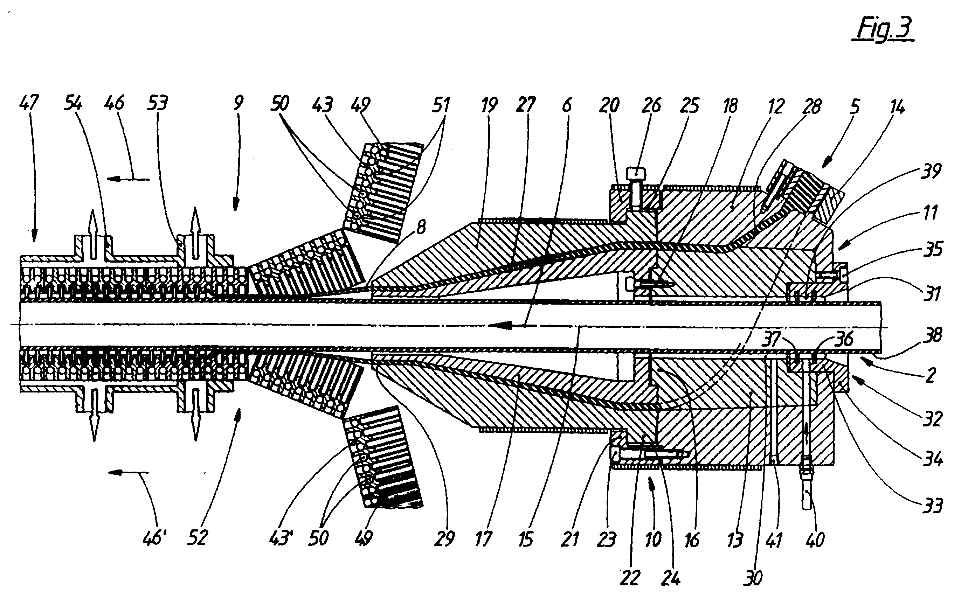

Einzelheiten zum Querspritzkopf 5 und teilweise zur Formmaschine 9 sind aus Fig. 3 erkennbar. Der Querspritzkopf 5 weist einen konzentrisch zur Produktionsrichtung 6 angeordneten Rohrkopf 10 auf, der einen äußeren Tragring 12 und ein inneres Füllstück 13 aufweist. Der äußere Tragring 12 ist an einem Anschlußteil 14 des Extruders 4 angebracht. Das - bezogen auf die Mittel-Längs-Achse 15 - radial fest im Tragring 12 angebrachte Füllstück 13 weist einen in Produktionsrichtung 6 vorspringenden Ringbund 16 auf, auf dem ein Innen-Düsendorn 17 mittels Schrauben 18 axial und radial fest angebracht ist. Ebenfalls konzentrisch zur Achse 15 ist ein Düsenmantel 19 mittels eines Justierrings 20 am Tragring 12 befestigt. Der Justierring 20 weist einen radial zur Achse 15 nach innen vorspringenden Ringbund 21 auf, der einen Ringflansch 22 des Düsenmantels 19 umgreift. Er ist mittels Schrauben 23 fest mit dem Tragring 12 verbunden, wodurch der Düsenmantel 19 in Richtung der Achse 15 fest mit dem Tragring 12 verbunden ist. Zwischen der Außenumfangsfläche 24 des Ringflansches 22 und dem Justierring 20 ist ein ringförmiger Spalt 25 ausgebildet. Im Justierring 20 sind in gleichmäßigen Winkelabständen radial zur Achse 15 Justierschrauben 26 angeordnet, die gegen die Außenumfangsfläche 24 anliegen. Durch Verstellen dieser Justierschrauben 26 wird der Düsenmantel 19 radial zur Achse 15 und damit relativ zum Tragring 12 ausgerichtet. Zwischen dem Innen-Düsendorn 17 und dem Düsenmantel 19 ist ein Düsen-Kanal 27 ausgebildet, dessen radiale Weite über den Umfang durch die geschilderte Einstellbarkeit des Düsenmantels 19 veränderbar ist. In diesen Düsen-Kanal 27 mündet ein Schmelze-Kanal 28 ein, der vom Extruder 4 durch das Anschußteil 14 und den Tragkörper 11 verläuft. Der Düsen-Kanal 27 endet unmittelbar vor der Formmaschine 9 in einer Ring-Düse 29, aus der - wie bereits erwähnt- der Schlauch 8 aus warmplastischem Kunststoff austritt.

Der Rohrkopf 10 ist in Richtung der Achse 15 durchgehend hohl ausgebildet, d.h. sowohl das innere Füllstück 13 als auch der Innen-Düsendorn 17 sind ringförmig ausgebildet, umschließen also einen konzentrisch zur Achse 15 verlaufenden Hohlraum, der einen Durchführ-Kanal 30 für das Medienrohr 2 bildet. An der Eintrittsseite 31 für das Medienrohr 2 ist eine Trennmittel-Auftragsvorrichtung 32 am Rohrkopf 10 angebracht. Diese weist einen rohrförmigen Einsatz 33 auf, der in den Tragkörper 11 eingesetzt ist. Er ist mittels eines Flansches 34 gegen den Tragkörper 11 festgelegt und mittels Schrauben 35 an diesem befestigt. Der rohrförmige Einsatz 33 ist mit zwei konzentrisch zur Achse 15 verlaufenden, und in Produktionsrichtung 6 voneinander beabstandeten ringförmigen Trennwänden 36, 37 versehen, die dichtend an der Außenwand 38 des konzentrisch zur Achse 15 in den Durchführ-Kanal 30 eingeführten Medienrohres 2 anliegen und auf diese Weise einen Trennmittel-Auftragsraum 39 begrenzen. In diesen Trennmittel-Auftragsraum 39 führt von außen durch den Tragkörper 11 eine Trennmittel-Zuführleitung 40. Da der Durchfür-Kanal 30 nach außen abgeschlossen ist, mündet - bezogen auf die Produktionsrichtung 6 - hinter der Auftragsvorrichtung 32 aus diesem Kanal 30 eine Druckausgleichs-Leitung 41 aus.

Die Formmaschine 9 weist in üblicher Weise einen Maschinentisch 42 auf, auf dem Halbkokillen 43, 43' angeordnet sind, die jeweils zu zwei sogenannten Ketten 44 bzw. 44' miteinander verbunden sind. Die Ketten 44, 44' sind an ihrem in Produktionsrichtung 6 gesehenen rückwärtigen Ende über als sogenannte Einlaufrollen 45 dienende Umlenkräder geführt. Die einzelnen Halbkokillen 43, 43' werden beim Umlauf der Ketten 44, 44' entsprechend den Umlaufrichtungspfeilen 46, 46' in eine Formstrecke 47 eingeschwenkt, in der jeweils zwei Halbkokillen 43, 43' zu einem Kokillenpaar vereinigt werden, wobei wiederum in Produktionsrichtung 6 hintereinander folgende Kokillenpaare dicht an dicht liegen. Am in Produktionsrichtung 6 vorderen Ende des Maschinentisches 42 sind ebenfalls als Umlenkräder dienende Rücklaufrollen 48 drehbar gelagert, um die die Ketten 44, 44' umgelenkt und zu den Einlaufrollen 45 zurückgeführt werden. Die Kokillenpaare werden durch einen nicht dargestellten Antrieb in Produktionsrichtung 6 durch die Formstrecke 47 geschoben.

Die Halbkokillen 43, 44 sind an ihrer Innenseite mit einer Profilierung 49 versehen, die der Form der Querrillen 3 entspricht. Sie weisen weiterhin Vakuum-Kanäle 50 auf, die über Vakuum-Schlitze 51 mit der Innenseite der Halbkokillen 43, 43' verbunden sind. Die Vakuum-Schlitze 51 enden also in der Profilierung 49. Der Maschinentisch 42 ist im Bereich des Einlaufes 52 der Formstrecke 47 mit einer ersten Vakuum-Zuführeinrichtung 53 versehen, durch die Vakuum-Kanäle 50 der Halbkokillen 43 von einer nicht dargestellten Unterdruckeinrichtung, beispielsweise einer Vakuumpumpe mit Unterdruck beaufschlagt werden. Dieser ist in Produktionsrichtung 6 eine zweite Vakuum-Zuführeinrichtung 54 nachgeordnet, die im Grundsatz in gleicher Weise die Vakuum-Kanäle 50 und damit die Schlitze 51 und damit die Innenseiten der Halbkokillen 43, 43' mit - bezogen auf Atmosphärendrück - Unterdruck beaufschlagt.

Der Schlauch 8 aus warmplastischem Kunststoff wird - wie Fig. 3 entnehmbar ist - mit radialem Abstand zu dem Medienrohr 2 aus der Ring-Düse 29 extrudiert. Da die Außenwand 38 des Medienrohres mit einer dünnen Schicht eines temperaturbeständigen Trennmittels beschichtet ist, kann der warmplastische Schlauch 8 nicht am Medienrohr 2 ankleben bzw. mit diesem verschweißen. Derartige Trennmittel sind bekannt. Es ist sogar vorstellbar, Wasser als Trennmittel einzusetzen, das verdampft und so eine Trennschicht bildet. Beim Eintritt des Schlauches 8 in die Formstrecke 47 wird der Schlauch 8 aufgrund des Unterdrucks an den Innenseiten der Halbkokillen 43, 43' in die Profilierung 49 gesaugt und erhält hierdurch das Profil mit Querrillen 3. Die erste Vakuum-Zuführeinrichtung 53 dient hierbei dazu, erst einmal den Schlauch 8 in die Profilierung 49 zu saugen, also den Schlauch 8 zu verformen. Die nachfolgende zweite Vakuum-Zuführeinrichtung 54 dient dann dazu, den bereits verformten Schlauch 8 zu stabilisieren, also in der verformten Form zu halten. Das Medienrohr 2, der Schlauch 8 und die Halbkokillen 43, 43' in der Formstrecke 47 haben nahezu die gleiche Geschwindigkeit in Produktionsrichtung 6, d.h. zwischen dem sich aus dem Schlauch 8 bildenden Hüll-Wellrohr 1 und dem Medienrohr 2 besteht keine gravierende Differenzgeschwindigkeit in Produktionsrichtung 6. Da der Rohrkopf 10 wegen des reinen Vakuum-Verfahrens bei der Verformung des Schlauches 8 nicht in die Formstrecke 47 hineinreicht, kann das Medienrohr 2 einen - bezogen auf den Innendurchmesser D des Hüll-Welkohres 1 - großen Außendurchmesser d aufweisen. Es kommt hinzu, daß das Medienrohr 2 nicht radial zur Achse 15 steif sein kann, da es während des Einlaufes zusammen mit dem Schlauch 8 in die Formstrecke 47 nicht komprimiert werden muß; es ist kein Platz für Maschinenteile, wie Teile des Rohrkopfes 10, erforderlich. Auf der Formstrecke 47 wird der Schlauch 8 in üblicher Weise so weit abgekühlt, daß aus der Formstrecke 47 das bereits eigenstabile Hüll-Wellrohr 1 mit Querrillen 3 austritt, in dem sich das Medienrohr 2 befindet.

Dieses Hüll-Welkohr 1 wird in einem der Formmaschine 9 nachgeordneten Kühlbad 55 mittels eines geeigneten Kühlmediums 56 weiter abgekühlt, das durch nur angedeutete Düsen 57 auf das Welkohr 1 gerichtet wird. Hierbei kann es sich um Luft oder Wasser handeln. Derartige Kühlbäder sind in der Praxis allgemein üblich und bekannt.

Dem Kühlbad 55 ist in Produktionsrichtung 6 eine Band- oder Raupen-Abzugsvorrichtung 58 nachgeordnet, mittels derer das Hüll-Welkohr 1 in Produktionsrichtung 6 transportiert wird. Derartige Band- oder Raupen-Abzugsvorrichtungen 58 sind ebenfalls in der Praxis allgemein üblich und bekannt.

Der Abzugsvorrichtung 58 ist eine Trennvorrichtung 59 nachgeordnet, die beispielsweise mit einer Trennsäge 60 ausgerüstet ist, die in üblicher Weise während der Ausführung eines Trennvorganges mit dem Hüll-Welkohr 1 und dem in diesem mitlaufenden Medienrohr 2 in Produktionsrichtung 6 aus der in Fig. 2 ausgezogen dargestellten Stellung bis in die gestrichelt dargestellte Stellung um eine Wegstrecke a mitläuft. Die Durchtrennung des Hüll-Wellrohres 1 mit Medienrohr 2 erfolgt jeweils in Längen, die auf einer nachgeordneten Aufwickelvorrichtung 61 aufgewickelt werden können.

## Patentansprüche

1. Verfahren zur Herstellung eines Hüll-Wellrohres (1) mit einem in diesem befindlichen Medienrohr (2),
wobei ein Schlauch (8) aus warmplastischem Kunststoff kontinuierlich in einer Produktionsrichtung (6) erzeugt wird,
wobei ein Medienrohr (2) mit Spiel gegenüber dem Schlauch (8) in Produktionsrichtung (6) in den Schlauch (8) eingeführt wird,
wobei der Schlauch (8) und das in ihm befindliche Medienrohr (2) in Produktionsrichtung (6) transportiert werden und
wobei der Schlauch (8) mit Querrillen (3) versehen wird, und
wobei die Querrillen (3) ausschließlich durch auf die Außenseite des Schlauches (8) einwirkenden Unterdruck gegenüber Atmosphärendruck erzeugt werden.

2. Verfahren nach Anspruch 1, dadurch gekennzeichnet, daß das Medienrohr (2) vor der Einführung in den Schlauch (8) mit einem Trennmittel versehen wird.

3. Verfahren nach Anspruch 1, dadurch gekennzeichnet, daß das Medienrohr (2) gegenüber dem Schlauch (8) mit Abstand geführt wird.

4. Verfahren nach Anspruch 1, dadurch gekennzeichnet, daß das Hüll-Wellrohr (1) mit einem Innendurchmesser (D) erzeugt wird, für den im Vergleich zum Außendurchmesser (d) des Medienrohres (2) gilt:
0,65 D ≤ d ≤ 0,95 D und bevorzugt 0,7 D ≤ d ≤ 0,95 D.

5. Verfahren nach Anspruch 1, dadurch gekennzeichnet, daß das Medienrohr (2) weitgehend unkomprimierbar ist.

6. Vorrichtung zur Durchführung des Verfahrens nach einem der Ansprüche 1 bis 5,
mit einem Extruder (4) mit einem Querspritzkopf (5), der einen Rohrkopf (10) mit einem in Produktionsrichtung (6) durchgehenden Durchführ-Kanal (30) für das Medienrohr (2) und eine den Durchführ-Kanal (30) umgebende Ring-Düse (29) aufweist,
mit einer dem Rohrkopf (10) in Produktionsrichtung (6) nachgeordneten Formmaschine (9), die auf einer Formstrecke (47) sich zu einer in Produktionsrichtung (6) bewegten geschlossenen Form ergänzende Halbkokillen (43, 43') mit einer den Querrillen (3) des Hüll-Wellrohres (1) entsprechenden Profilierung (49) an ihrer Innenseite aufweist und die mit einer Einrichtung zum Verformen des Schlauches (8) an der Profilierung (49) versehen ist, wobei der Rohrkopf (10) vor der Formstrecke (47) endet,
wobei zum Verformen des Schlauches (8) an der Profilierung (49) ausschließlich eine Einrichtung zur Erzeugung von Unterdruck gegenüber Atmosphärendruck an der Innenseite der Halbkokillen (43, 43') vorgesehen ist.

7. Vorrichtung nach Anspruch 6, dadurch gekennzeichnet, daß in Produktionsrichtung (6) vor der Ring-Düse (29) eine Trennmittel-Auftragsvorrichtung (32) vorgesehen ist.
